# EUROPEAN PATENT APPLICATION

(11) **EP 4 819 723 A1**
(43) Date of publication of application: **07.10.2026**
(21) Application number: 24918349.2
(22) Date of filing: 26.12.2024
(51) Int. Cl.: H04W 72/0446

(54) **COMMUNICATION METHOD AND RELATED DEVICE**

(30) Priority: 15.01.2024 CN 202410061189
(71) Applicant: Honor Device Co., Ltd., Shenzhen, Guangdong 518040 (CN)
(72) Inventor: CHI, Liangang, Shenzhen, Guangdong 518040 (CN)
(74) Representative: Henselmann, Alexander Gerhard
(86) International application number: PCT/CN2024/142603
(87) International publication number: WO 2025/152741

(57) **Abstract**

This application relates to the field of communication technologies and provides a communication method and a related device. The method is applied to a network device, including: indicating configuration information of a physical downlink control channel PDCCH of a target search space SS, where the configuration information includes a maximum number of retransmissions; determining a retransmission time domain position of the SS PDCCH; and repeatedly sending the SS PDCCH in the retransmission time domain position until the maximum number of retransmissions is reached. Therefore, the SS PDCCH is repeatedly sent for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

## Description

This application claims priority to Chinese Patent Application No. 202410061189.9, filed with the China National Intellectual Property Administration on January 15, 2024 and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

Because a conventional terrestrial network cannot provide seamless coverage, especially in places where base stations cannot be deployed, such as at sea, in deserts, and in the air, a satellite communication technology emerges with the development of communication technologies, in particular, with the continuous development of a new-generation mobile communication technology, such as the fifth generation mobile communication technology (the fifth generation mobile networks, 5G for short).

The satellite communication technology refers to a communication technology performed by a radio communication device on the ground by using a satellite as a relay. The satellite communication system includes a satellite part and a terrestrial part. The terrestrial part includes a network device, such as a base station, and a terminal. The terminal may be user equipment (user equipment, UE). The base station may communicate with the terminal on a downlink (downlink) link or an uplink (uplink) link. Specifically, the uplink refers to a link through which the terminal sends data to the base station, and the downlink refers to a link through which the base station sends data to the terminal. Each base station usually has a coverage, which is also referred to as a coverage area.

In the related art, to achieve the seamless coverage of a network through the satellite communication technology, the base station needs to send a plurality of downlink beams at the same time. However, the base station cannot focus energy in several beams, and therefore, cannot focus signal energy. Consequently, wireless communication has relatively large losses, and downlink coverage is limited. Therefore, how to enhance the downlink coverage and improve communication quality has become an important concern in the industry.

### SUMMARY

An objective of this application is to provide a communication method and a related device, which can enhance a downlink coverage and improve communication efficiency.

According to a first aspect, this application provides a communication method, applied to an electronic device such as a base station. The method includes: indicating configuration information of a physical downlink control channel PDCCH of a target search space SS, the configuration information including information about a maximum number of retransmissions; determining an available retransmission time domain position of the PDCCH of the SS; and repeatedly sending the PDCCH of the SS in an available retransmission time domain position based on the information about a maximum number of retransmissions. Therefore, the SS PDCCH is repeatedly sent for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

In some specific implementations, the configuration information further includes initial transmission configuration information and/or transmission period information.

In some specific implementations, a length of the transmission period is a sum of target quantities of slots; and the method for determining a transmission time domain position of the PDCCH of the SS includes: determining whether a start slot in the transmission period satisfies the following equation: $\left({2}^{μ}\times 10{n}_{f}+{n}_{s}\right) modT = {Offset}_{slot}$
where µ is a subcarrier spacing parameter, n_{f} is a system frame number, nₛ is a slot number in a radio frame, T is the transmission period, and offsetₛₗₒₜ is a period offset value. If the equation is satisfied, a time window determined by the start slot and a duration T is determined as the transmission period of the PDCCH of the SS. An initial transmission time domain position and/or the available retransmission time domain position of the PDCCH of the SS are determined within the transmission period of the PDCCH of the SS. Therefore, the SS PDCCH is repeatedly sent for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

Optionally, for the subcarrier spacing parameter *µ* in the foregoing system frame, reference may be made to Section 4.2 of a Protocol 3GPP TS 38.211 for details as shown in the following Table 1:

**Table 1**

| µ | Δf = 2^{µ} · 15[kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |
| 5 | 480 | Normal |
| 6 | 960 | Normal |

It may be learned from Table 1 that the foregoing subcarrier spacing parameter *µ* may specifically be a value in the foregoing Table 1.

In some specific implementations, the determining an initial transmission time domain position of the PDCCH of the SS within the transmission period of the PDCCH of the SS includes: using the first transmission occasion as the initial transmission time domain position of the PDCCH of the SS within the transmission period of the PDCCH of the SS.

In some specific implementations, the target SS is a common search space CSS, and the determining an available retransmission time domain position of the PDCCH of the SS includes: determining a retransmission time domain position set for retransmission of the PDCCH of the CSS; and determining, as an available retransmission time domain position of the PDCCH of the CSS, a time domain position following the initial transmission time domain position in the retransmission time domain position set within the transmission period of the PDCCH of the CSS. Therefore, the SS PDCCH is repeatedly sent for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

In some specific implementations, the indicating configuration information of a physical downlink control channel PDCCH of a target search space SS includes: indicating the configuration information of the PDCCH of the CSS through first system information block SIB1 signaling or radio resource control RRC signaling.

In some specific implementations, the repeatedly sending the PDCCH of the SS in an available retransmission time domain position based on the information about a maximum number of retransmissions includes: determining an initial-transmission candidate PDCCH set for an initial transmission of the PDCCH of the CSS; and repeatedly sending the PDCCH of the CSS in the available retransmission time domain position based on the information about a maximum number of retransmissions and a retransmission candidate PDCCH set, the retransmission candidate PDCCH set corresponding to the initial-transmission candidate PDCCH set. Therefore, a resource may be saved, and complexity of blind decoding may be reduced.

In some specific implementations, the repeatedly sending the PDCCH of the SS in an available retransmission time domain position based on the information about a maximum number of retransmissions includes: determining an initial transmission SS for an initial transmission of the PDCCH of the CSS; and repeatedly sending the PDCCH of the CSS in the retransmission time domain position based on the information about a maximum number of retransmissions and a retransmission SS, the candidate PDCCH set of the retransmission SS being the same as the candidate PDCCH set of the initial transmission SS. Therefore, a resource may be saved, and complexity of blind decoding may be reduced.

In some specific implementations, the configuration information further includes frequency domain resource CORESET configuration information.

In some specific implementations, the target SS is a dedicated search space USS, and the determining the available retransmission time domain position of the PDCCH of the SS includes: determining a retransmission time domain position set for retransmission of the PDCCH of the USS based on CORESET configuration information corresponding to the USS; and determining, as the available retransmission time domain position of the PDCCH of the USS, a time domain position following the initial transmission time domain position in the retransmission time domain position set. Therefore, the SS PDCCH is repeatedly sent for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

In some specific implementations, the indicating configuration information of a physical downlink control channel PDCCH of a target search space SS includes: indicating the configuration information of the PDCCH of the USS through the RRC signaling.

According to a second aspect, this application provides a communication method, applied to an electronic device such as a mobile phone or a computer. The method includes: receiving the configuration information of the physical downlink control channel PDCCH of the target search space SS, the configuration information including the maximum number of retransmissions; and repeatedly receiving the SS PDCCH in the retransmission time domain position until the maximum number of retransmissions is reached. Therefore, the SS PDCCH is repeatedly received for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

In some specific implementations, the repeatedly receiving the PDCCH of the SS based on the information about a maximum number of retransmissions includes: repeatedly receiving, if signal quality of the PDCCH of the SS is less than or equal to a quality threshold, the PDCCH of the SS based on the information about a maximum number of retransmissions. Therefore, the SS PDCCH is repeatedly received for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

In some specific implementations, the configuration information further includes initial transmission configuration information and/or transmission period information.

In some specific implementations, a length of the transmission period is a sum of target quantities of slots; and the method for determining a transmission time domain position of the PDCCH of the SS includes: determining whether a start slot in the transmission period satisfies the following equation: $\left({2}^{μ}\times 10{n}_{f}+{n}_{s}\right) modT = {Offset}_{slot}$
where µ is a subcarrier spacing parameter, n_{f} is a system frame number, nₛ is a slot number in a radio frame, T is the transmission period, and offsetₛₗₒₜ is a period offset value. If the equation is satisfied, a time window determined by the start slot and a duration T is determined as the transmission period of the PDCCH of the SS. An initial transmission time domain position and/or the available retransmission time domain position of the PDCCH of the SS are determined within the transmission period of the PDCCH of the SS. Therefore, the SS PDCCH is repeatedly received for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality. Therefore, the SS PDCCH is repeatedly received for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

In some specific implementations, the determining an initial transmission time domain position of the PDCCH of the SS within the transmission period of the PDCCH of the SS includes: using the first transmission occasion as the initial transmission time domain position of the PDCCH of the SS within the transmission period of the PDCCH of the SS. Therefore, the SS PDCCH is repeatedly received for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

In some specific implementations, the target SS is a common search space CSS, and the determining an available retransmission time domain position of the PDCCH of the SS includes: determining a retransmission time domain position set for retransmission of the PDCCH of the CSS; and determining, as an available retransmission time domain position of the PDCCH of the CSS, a time domain position following the initial transmission time domain position in the retransmission time domain position set within the transmission period of the PDCCH of the CSS. Therefore, the SS PDCCH is repeatedly received for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

In some specific implementations, the receiving configuration information of a physical downlink control channel PDCCH of a target search space SS includes: receiving the configuration information of the PDCCH of the CSS through first system information block SIB1 signaling or radio resource control RRC signaling.

In some specific implementations, the repeatedly receiving the PDCCH of the SS in an available retransmission time domain position based on the information about a maximum number of retransmissions includes: determining an initial-transmission candidate PDCCH set for an initial transmission of the PDCCH of the CSS; and repeatedly receiving the PDCCH of the CSS in the available retransmission time domain position based on the information about a maximum number of retransmissions and a retransmission candidate PDCCH set, the retransmission candidate PDCCH set corresponding to the initial-transmission candidate PDCCH set. Therefore, the SS PDCCH is repeatedly received for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

In some specific implementations, the repeatedly receiving the PDCCH of the SS in an available retransmission time domain position based on the information about a maximum number of retransmissions includes: determining an initial transmission SS for an initial transmission of the PDCCH of the CSS; and repeatedly receiving the PDCCH of the CSS in the retransmission time domain position based on the information about a maximum number of retransmissions and a retransmission SS, the candidate PDCCH set of the retransmission SS being the same as the candidate PDCCH set of the initial transmission SS. Therefore, the SS PDCCH is repeatedly received for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

In some specific implementations, the configuration information further includes frequency domain resource CORESET configuration information.

In some specific implementations, the target SS is a dedicated search space USS, and the determining the available retransmission time domain position of the PDCCH of the SS includes: determining a retransmission time domain position set for retransmission of the PDCCH of the USS based on CORESET configuration information corresponding to the USS; and determining, as the available retransmission time domain position of the PDCCH of the USS, a time domain position following the initial transmission time domain position in the retransmission time domain position set. Therefore, the SS PDCCH is repeatedly received for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

In some specific implementations, the sending configuration information of a physical downlink control channel PDCCH of a target search space SS includes: sending the configuration information of the PDCCH of the USS through the RRC signaling.

According to a third aspect, this application provides a network device. The network device includes: a memory, configured to store a computer program or computer instructions; and a processor, configured to execute the computer program or the computer instructions stored in the memory, to enable the network device to perform the method according to the first aspect.

According to a fourth aspect, this application provides a terminal device. The terminal device includes: a memory, configured to store a computer program or computer instructions; and a processor, configured to execute the computer program or the computer instructions stored in the memory, to enable the terminal device to perform the method according to the second aspect.

According to a fifth aspect, this application provides a communication system. The communication system includes a first device and a second device. The first device is configured to perform the method according to the first aspect, and the second device is configured to perform the method according to the second aspect.

According to a sixth aspect, this application provides a computer storage medium, configured to store a computer program. The computer program, when executed, is configured to implement the method according to the first aspect and the second aspect.

According to a seventh aspect, this application provides a communication apparatus. The apparatus is applied to an electronic device such as a base station, and includes: an information indication module, a position determining module, and a repeated sending module. The information indication module is configured to indicate the configuration information of the physical downlink control channel PDCCH of the target search space SS, the configuration information including the maximum number of retransmissions. The position determining module is configured to determine the retransmission time domain location of the SS PDCCH. The repeated sending module is configured to repeatedly send the SS PDCCH in the retransmission time domain position until the maximum number of retransmissions is reached. Therefore, the SS PDCCH is repeatedly sent for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

According to an eighth aspect, this application provides a communication apparatus. The apparatus is applied to an electronic device such as a mobile phone or a computer, and includes: an information receiving module and a repeated receiving module. The information receiving module is configured to receive the configuration information of the physical downlink control channel PDCCH of the target search space SS, the configuration information including the maximum number of retransmissions. The repeated receiving module is configured to repeatedly receive the SS PDCCH in the retransmission time domain position until the maximum number of retransmissions is reached. Therefore, the SS PDCCH is repeatedly received for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

Based on the foregoing technical solutions, this application has the following beneficial effects.

This application provides a communication method and a related device. According to the method, the retransmission time domain position of the SS PDCCH is determined after the configuration information of the physical downlink control channel PDCCH of the target search space SS containing the maximum number of retransmissions is indicated, and the SS PDCCH is repeatedly transmitted for a plurality of times in the retransmission time domain position until the maximum number of retransmissions is reached. Therefore, the SS PDCCH is repeatedly sent for a plurality of times in the determined retransmission time domain position until the maximum number of retransmissions is reached, so that a corresponding transmission performance requirement can be satisfied, thereby reducing loss of wireless communication, enhancing a downlink coverage range, and improving communication efficiency.

### BRIEF DESCRIPTION OF DRAWINGS

FIG. 1 is an example diagram of a communication scenario between a base station and a terminal according to an embodiment of this application;
FIG. 2A is a flowchart of a communication method for a CSS PDCCH according to an embodiment of this application;
FIG. 2B is a flowchart of a communication method for a USS PDCCH according to an embodiment of this application;
FIG. 3 is a flowchart of another communication method according to an embodiment of this application;
FIG. 4 is a schematic diagram of hardware composition of an electronic device according to an embodiment of this application;
FIG. 5 is a schematic diagram of hardware composition of another electronic device according to an embodiment of this application;
FIG. 6 is a schematic diagram of a communication apparatus according to an embodiment of this application; and
FIG. 7 is a schematic diagram of another communication apparatus according to an embodiment of this application.

### DESCRIPTION OF EMBODIMENTS

Terms "first", "second", "third", and the like in the specification, claims, and accompanying drawings of this application are used to distinguish between different objects rather than to limit a specific order.

In embodiments of this application, a phrase such as "in an example" or "for example" is used to represent giving an example, an illustration, or a description. Any embodiment or design solution described as "in an example" or "for example" in embodiments of this application should not be explained as being more preferred or having more advantages than another embodiment or design solution. To be precise, use of the term such as "in an example" or "for example" is intended to present a relative concept in a specific manner.

Embodiments of this application are applied to a communication system. The communication system may be a second generation (2G) communication system, a third generation (3G) communication system, an LTE system, a fifth generation (5G) communication system, a hybrid architecture of a long term evolution (Long Term Evolution, LTE) and 5G, a 5G new radio (5G New Radio, 5G NR) system, a new communication system appearing in future communication development, and the like.

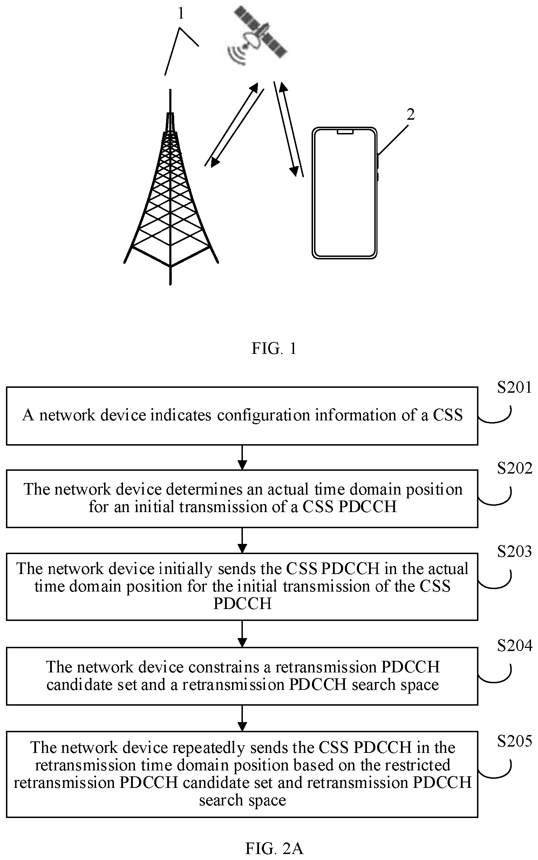

The communication system includes a first device and a second device. The first device may be a device configured to provide a network communication function on a network side, which is also referred to as a network device or a network element in some cases. The network device may generally be a base station (including a functional unit of the base station or a combination of functional units of the base station) or a core network unit. The core network unit may be a functional unit in a core network, including but not limited to an access and mobility management function (Access and Mobility Management Function, AMF) unit or a session management function (Session Management Function, SMF) unit. The second device may be a device of an access network, which may generally be a terminal. Referring to FIG. 1, it is an example diagram of a communication scenario between a base station and a terminal according to an embodiment of this application. FIG. 1 includes a base station 1 and a terminal 2.

In this embodiment provided in this application, the base station may be any device having a radio transceiver function, and includes, but is not limited to: an evolved base station (a NodeB, an eNB, or an e-NodeB, an evolutional Node B) in a long term evolution (long term evolution, LTE), a base station (a gNodeB or a gNB) or a transmission receiving point/transmission reception point (transmission receiving point/transmission reception point, TRP) in new radio (new radio, NR), a 3GPP evolved base station, an access node in a Wi-Fi system, a wireless relay node, a wireless backhaul node, and the like. The base station may be: a macro base station, a micro base station, a picocell, a small station, a relay station, a balloon station, or the like. The base station may include one or more co-site or non-co-site transmission reception points (Transmission Reception Point, TRP). The base station may also be a wireless controller in a cloud radio access network (cloud radio access network, CRAN) scenario, a centralized unit (centralized unit, CU), and/or a distributed unit (distributed unit, DU). The base station may communicate with the terminal, or may communicate with the terminal through the relay station. The terminal may communicate with a plurality of base stations of different technologies. For example, the terminal may communicate with a base station supporting an LTE network, or may communicate with a base station supporting a 5G network, or may perform dual connectivity with a base station supporting an LTE network and a base station supporting a 5G network.

In this embodiment provided in this application, the terminal may be in various forms, for example, a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), an on-board terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. Sometimes, the terminal may also be referred to as a terminal device, user equipment (user equipment, UE), an access terminal device, an on-board terminal, an industrial control terminal, a UE unit, a UE station, a mobile station, a mobile console, a remote station, a remote terminal device, a mobile device, a UE terminal device, a terminal device, a wireless communication device, a UE proxy, a UE apparatus, or the like. The terminal may also be a fixed terminal or a mobile terminal.

As described above, because a conventional terrestrial network cannot provide seamless coverage, especially in places in which base stations cannot be deployed, such as the sea, the desert, and the air, a satellite communication technology emerges accordingly.

The satellite communication technology has the following several features. First, the satellite communication technology enables a large communication range. Within a range covered by electric waves transmitted by a satellite, communication may be performed between any two points. For regions not covered by a current cellular communication system or covered by the system with high costs, satellite communication may be used to resolve a communication problem. Second, the satellite communication technology is not easily affected by geological disasters and has high reliability. The satellite communication may be used to rapidly establish communication connections if cellular communication infrastructures are unavailable in extreme cases of disasters (such as an earthquake). Third, the satellite communication technology enables a lower latency and may be applied in industry. For example, for a latency-sensitive service of long-distance transmission, a latency of service transmission may be lowered through the satellite communication.

In the related art, in the inception discussion of the 3GPP R19 NTN (Non-Terrestrial Network, non-terrestrial network) proposed by a standardization organization, such as the third generation partnership project 3GPP, considering that seamless coverage is achieved for the network by using the satellite communication technology, it is required that a plurality of downlink beams occur simultaneously for a base station. The beams are communication resources. The beam may be a wide beam, a narrow beam, or another type of a beam, and a technology for forming the beam may be a beamforming technology or another technical means.

However, because the base station cannot focus energy on several beams, aggregation of signals cannot be implemented. Consequently, a huge loss is caused for wireless communication, thereby limiting downlink coverage.

In view of this, this application provides a communication method and a related device. According to the method, the retransmission time domain position of the SS PDCCH is determined after the configuration information of the physical downlink control channel PDCCH of the target search space SS containing the maximum number of retransmissions is indicated, and the SS PDCCH is repeatedly transmitted for a plurality of times in the retransmission time domain position until the maximum number of retransmissions is reached. Therefore, a corresponding transmission performance requirement may be satisfied, a loss of wireless communication may be reduced, a downlink coverage may be enhanced, and communication quality may be improved by repeatedly sending the SS PDCCH for a plurality of times in the determined retransmission time domain position until the maximum number of retransmissions is reached.

To make the technical solutions of this application clearer and easier to understand, the communication method of this application is described below with reference to the accompanying drawings.

Referring to FIG. 2A, it is a flowchart of a communication method for a CSS PDCCH according to an embodiment of this application. It should be noted that the communication method provided in this embodiment of this application is for communication of a common search space (Common search space, CSS) PDCCH, i.e., a CSS PDCCH, other than a physical downlink control channel (Physical downlink control channel, PDCCH) of a first system information block (System Information Block1, SIB1), i.e., an SIB1 PDCCH. The communication method may be performed by a network device in a communication system, for example, a base station. The method includes the following steps.

S201: A network device indicates configuration information of a CSS.

The configuration information of the CSS includes initial transmission configuration information and additional configuration information.

The initial transmission configuration information is configuration information stipulated based on an R18 Protocol (or the previous 3GPP NR Protocol) and includes a time-frequency resource an initial transmission on a CSS PDCCH and an initial transmission time domain position set.

Specifically, the time-frequency resource, i.e., a CORESET configuration of the CSS PDCCH, is semi-statically configured by higher-layer signaling. The CORESET includes information, such as a frequency band occupied by the PDCCH in a frequency domain and a quantity of orthogonal frequency division multiplexing (Orthogonal Frequency Division Multiplexing, OFDM) symbols occupied by the PDCCH in a time domain. The CORESET may be located at any position of a slot in the time domain and is located within a bandwidth part (Bandwidth Part, BWP) in the frequency domain.

The initial transmission time domain position set refers to a set of CSS PDCCH monitoring positions (PDCCH Monitoring Occasion, PMO) set, i.e., monitoring occasions. It should be noted that a quantity of PMOs in the PMO set for an initial transmission is not limited in this application and may be one or more.

The additional configuration information refers to configuration information of the CSS indicated through SIB1 signaling or RRC signaling.

In a 5G NR, the SIB1 signaling carries information about whether an access of a second device is allowed within coverage of a first device (i.e., information about whether user equipment is allowed to access a cell), and basic information required when the access of the second device is performed within the coverage of the first device, i.e., the foregoing additional configuration information of the CSS. The RRC signaling is radio signaling or lower-layer signaling and is used to process signaling interaction between the first device and the second device. TS36.331 of a 3GPP Specification defines the RRC signaling in detail. The RRC signaling may carry additional configuration information of a CSS.

Specifically, the additional configuration information of the CSS includes information about a transmission period T, a period offset value offsetₛₗₒₜ, and a maximum number of retransmissions. A length of the transmission period T may be represented through a quantity of radio frames (T=10 ms), subframes (T=1 ms), or slots (slot, T=125 ns). For example, one transmission period T may be 32 slots, that is, T=1 us (microsecond). The period offset value offsetₛₗₒₜ needs to be configured through a network or specified through a protocol by a person skilled in the art. The period offset value offsetₛₗₒₜ, if it is not configured through a network, is 0 by default.

S202: The network device determines an actual time domain position of the initial transmission of the CSS PDCCH.

If the transmission period T of the additional configuration information in step S201 is in a unit of a slot, it needs to be determined that a start slot in the transmission period satisfies the following Equation (1): $\left({2}^{μ}⋅10{n}_{f}+{n}_{s}\right) mod T = {Offset}_{slot}$ (1)
where µ is a subcarrier spacing parameter, n_{f} is a system frame number, nₛ is a slot number within a radio frame, T is the transmission period, and offsetₛₗₒₜ is a period offset value. Specifically, µ is a subcarrier spacing parameter of an OFDM system.

If the start slot in the transmission period T satisfies Equation (1), a time window determined through the start slot and a duration T is determined as the transmission period of the PDCCH of the CSS. Subsequently, the actual time domain position of the PDCCH of the CSS, i.e., an initial transmission time domain position and/or an available retransmission time domain position, is determined within the transmission period of the PDCCH of the CSS.

In some specific implementations, a manner of determining an initial transmission time domain position of the PDCCH of the CSS is to use a first transmission occasion as the initial transmission time domain position of the PDCCH of the CSS within the transmission period of the PDCCH of the CSS.

In some specific implementations, a manner of determining the available retransmission time domain position of the PDCCH of the CSS includes: first determining a retransmission time domain position set for retransmission of the PDCCH of the CSS; and subsequently, determining, as the available retransmission time domain position of the PDCCH of the CSS, a time domain position following the initial transmission time domain position in the retransmission time domain position set within the transmission period of the PDCCH of the CSS.

It should be noted that the foregoing embodiment is described by using the transmission period T in the unit of the slot. If the transmission period T of the additional configuration information in step S201 is in a unit of a radio frame or a subframe, it is similar to the foregoing equation. Details are not described herein again.

S203: The network device initially sends the CSS PDCCH in the actual time domain position of the initial transmission of the CSS PDCCH.

After determining the actual time domain position of the initial transmission of the CSS PDCCH, a first device may initially send the CSS PDCCH in the actual time domain position.

S204: The network device constrains a retransmission candidate PDCCH set and a retransmission PDCCH search space.

Because a system bandwidth in an NR is relatively large, if a PDCCH occupies an entire bandwidth in a frequency domain in this case, not only a resource is wasted, but also complexity of subsequent blind decoding performed by a second device is extremely high. A process in which the second device searches for the PDCCH on a time-frequency resource is referred to as blind decoding. Therefore, to reduce the complexity of the subsequent blind decoding performed by the second device and save a resource for the blind decoding, the first device needs to constrain the retransmission candidate PDCCH set (candidate PDCCH) and the retransmission PDCCH search space (search space, SS).

To constrain the retransmission candidate PDCCH set, in some specific implementations, it may be restricted that the retransmission candidate PDCCH set is consistent with the initial-transmission candidate PDCCH set, thereby reducing the complexity of the subsequent blind decoding performed by the second device. For example, assuming that the initial-transmission candidate PDCCH set is a first candidate set, the retransmission candidate PDCCH set may also be restricted to the first candidate set. In some other specific implementations, it may be constrained that the retransmission candidate PDCCH set is associated with the initial-transmission candidate PDCCH set, so that a unique corresponding retransmission candidate PDCCH set can be presumed from the initial-transmission candidate PDCCH set. It should be noted that this application does not limit a specific presumption rule.

For the retransmission PDCCH search space, it may be restricted that the retransmission PDCCH search space is consistent with the initial transmission PDCCH search space, thereby reducing the complexity of the subsequent blind decoding performed by the second device. In an example, assuming that the initial transmission PDCCH search space is a first search space, the retransmission candidate PDCCH set may also be restricted to the first search space.

It should be noted that S204 is an optional step in this embodiment of this application. S204 may not be performed when the communication method in embodiments of this application is performed.

S205: The network device repeatedly sends the CSS PDCCH in the retransmission time domain position based on the restricted retransmission candidate PDCCH set and the restricted retransmission PDCCH search space.

The retransmission time domain position refers to a time domain position in the PMO set other than the actual time domain position (i.e., the initial transmission PMO) for the initial transmission of the CSS PDCCH. After the actual time domain position of the initial transmission of the CSS PDCCH is determined in step S203, PMOs within each transmission period T other than an initial transmission PMO are used as a retransmission PMO set. To be specific, the time domain position following the initial transmission time domain position is determined as a retransmission time domain position of the retransmission of the CSS PDCCH. Therefore, the CSS PDCCH is repeatedly sent in the retransmission time domain position until a maximum number of retransmissions indicated in the additional configuration information is reached.

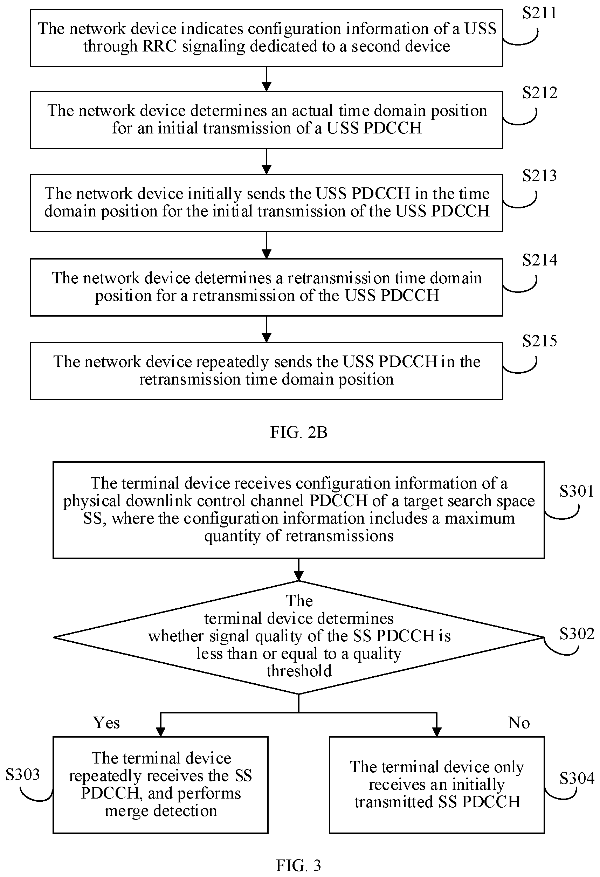

Referring to FIG. 2B, it is a flowchart of a communication method for a USS PDCCH according to an embodiment of this application. It should be noted that the communication method provided in this embodiment of this application is for communication on a dedicated search space (UE-specific SS, USS) corresponding to second device UE. The communication method may be performed by a network device in a communication system, for example, a base station. The method includes the following steps.

S211: The network device indicates configuration information of the USS through RRC signaling special for a second device.

If communication is performed for the USS PDCCH, reference needs to be made to a 3GPP 38.300 Protocol. Only when an RRC state of the second device UE is an RRC idle state (RRC_IDLE), the configuration information of the USS can be indicated through the RRC signaling special for the second device after the first device is connected to the second device. It may be understood that one second device has one unique corresponding RRC signaling.

Specifically, the additional configuration information of the CSS includes: a COREST configuration, a transmission period T, a period offset value offsetₛₗₒₜ, and a maximum number of retransmissions.

The CORESET includes information, such as a frequency band occupied by the PDCCH in a frequency domain and a quantity of orthogonal frequency division multiplexing (Orthogonal Frequency Division Multiplexing, OFDM) symbols occupied by the PDCCH in a time domain.

A length of the transmission period T may be represented through a quantity of radio frames (T=10 ms), subframes (T=1 ms), or slots (slot, T=125 ns). For example, one transmission period T may be 32 slots, that is, T=1 us (microsecond).

The period offset value offsetₛₗₒₜ needs to be configured through a network or specified through a protocol by a person skilled in the art. The period offset value offsetₛₗₒₜ, if it is not configured through a network, is 0 by default.

S212: The network device determines an actual time domain position of the initial transmission of the USS PDCCH.

Similar to the foregoing step S202, if the transmission period T of the additional configuration information in step S211 is in a unit of a slot, it needs to be determined that a start slot in the transmission period satisfies the following Equation (1): $\left({2}^{μ}⋅10{n}_{f}+{n}_{s}\right) mod T = {Offset}_{slot}$ (1)
where µ is a subcarrier spacing parameter, n_{f} is a system frame number, nₛ is a slot number within a radio frame, T is the transmission period, and offsetₛₗₒₜ is a period offset value.

If the start slot in the transmission period T satisfies Equation (1), a time window determined through the start slot and a duration T is determined as the transmission period of the PDCCH of the USS. Subsequently, the actual time domain position of the PDCCH of the USS, i.e., an initial transmission time domain position and/or an available retransmission time domain position, is determined within the transmission period of the PDCCH of the USS.

In some specific implementations, a manner of determining an initial transmission time domain position of the PDCCH of the USS is to use a first transmission occasion as the initial transmission time domain position of the PDCCH of the USS within the transmission period of the PDCCH of the USS.

In some specific implementations, a manner of determining an available retransmission time domain position of the PDCCH of the USS includes: first determining a retransmission time domain position set for retransmission of the PDCCH of the USS based on CORESET configuration information corresponding to a USS; and subsequently, determining a time domain position in the retransmission time domain position set following an initial transmission time domain position as the available retransmission time domain position of the PDCCH of the USS.

It should be noted that the foregoing embodiment is described by using the transmission period T in the unit of the slot. If the transmission period T of the retransmission information in step S211 is in a unit of a radio frame or a subframe, it is similar to the foregoing equation. Details are not described herein again.

S213: The network device initially sends the USS PDCCH in the time domain position of the initial transmission of the USS PDCCH.

After determining the actual time domain position of the initial transmission of the USS PDCCH, a first device may initially send the USS PDCCH in the actual time domain position.

S214: The network device determines the retransmission time domain position of the retransmission of the USS PDCCH.

The retransmission time domain position refers to a time domain position, in a PMO set converted through the COREST configuration in step S211, other than the actual time domain position (i.e., the initial transmission PMO) for the initial transmission of the USS PDCCH. After the actual time domain position of the initial transmission of the USS PDCCH is determined in step S212, PMOs within each transmission period T other than an initial transmission PMO are used as a retransmission PMO set. To be specific, the time domain position following the initial transmission time domain position is determined as a retransmission time domain position of the retransmission of the USS PDCCH. Therefore, the CSS PDCCH is repeatedly sent in the retransmission time domain position until a maximum number of retransmissions indicated in the additional configuration information is reached.

S215: The network device repeatedly sends the USS PDCCH in the retransmission time domain position.

Based on the above, this application discloses a communication method. The method is applied to an electronic device and includes: indicating configuration information of a physical downlink control channel PDCCH of a target search space SS, where the configuration information includes a maximum number of retransmissions; determining a retransmission time domain position of the SS PDCCH; and repeatedly sending the SS PDCCH in the retransmission time domain position until the maximum number of retransmissions is reached. Therefore, the SS PDCCH is repeatedly sent for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

Referring to FIG. 3, it is a schematic diagram of another communication method according to an embodiment of this application. The communication method may be performed by a terminal device in a communication system, for example, a mobile phone or a computer. The method includes the following steps.

S301: The terminal device receives configuration information of a physical downlink control channel PDCCH of a target search space SS, where the configuration information includes a maximum number of retransmissions.

It may be understood that the SS PDCCH herein includes the CSS PDCCH and the USS PDCCH.

S302: The terminal device determines whether signal quality of the SS PDCCH is less than or equal to a quality threshold, where if so, S303 is performed. If not, S304 is performed.

It may be understood that the quality threshold is a threshold for determining whether signal quality satisfies a requirement, and is a threshold configured by a terminal device in advance through a protocol. A specific value of the quality threshold is not limited in this application.

In some specific implementations, measurement indicators for the signal quality include a reference signal received power SS-RSRP (Synchronization Signals Reference Signal Received Power), a reference signal received quality SS-RSRQ (Synchronization Signals Reference Signal Received Quality), and the like. The RSRP is used to evaluate a signal strength between a terminal device and a network device such as a base station. A higher value of the RSRP indicates a stronger received signal, and a unit of the RSRP is dBm (decibel milliwatt). The RSRQ is used to measure quality of a received reference signal. A higher value of the RSRQ indicates better received signal quality, and the unit of the RSRQ is dB (decibel).

S303: The terminal device repeatedly receives the SS PDCCH and performs combined detection.

Only when the signal quality of the SS PDCCH is less than or equal to a preset quality threshold, the SS PDCCH needs to be repeatedly received. Therefore, the SS PDCCH is repeatedly received for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

S304: The terminal device receives only an initially transmitted SS PDCCH.

If the signal quality of the SS PDCCH is greater than the preset quality threshold, only the initially transmitted SS PDCCH may be received.

It should be noted that S302 and S304 are optional steps in this embodiment of this application. S302 and S304 may also not be performed when the communication method in embodiments of this application is performed.

Based on the above, this application discloses a communication method. The method is applied to an electronic device such as a mobile phone or a computer. The method includes: receiving the configuration information of the physical downlink control channel PDCCH of the target search space SS, the configuration information including the maximum number of retransmissions; and repeatedly receiving the SS PDCCH in the retransmission time domain position until the maximum number of retransmissions is reached. Therefore, the SS PDCCH is repeatedly received for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

Based on the foregoing communication method, this application further provides an electronic device configured to perform the foregoing communication method. A description is provided below with reference to the embodiments.

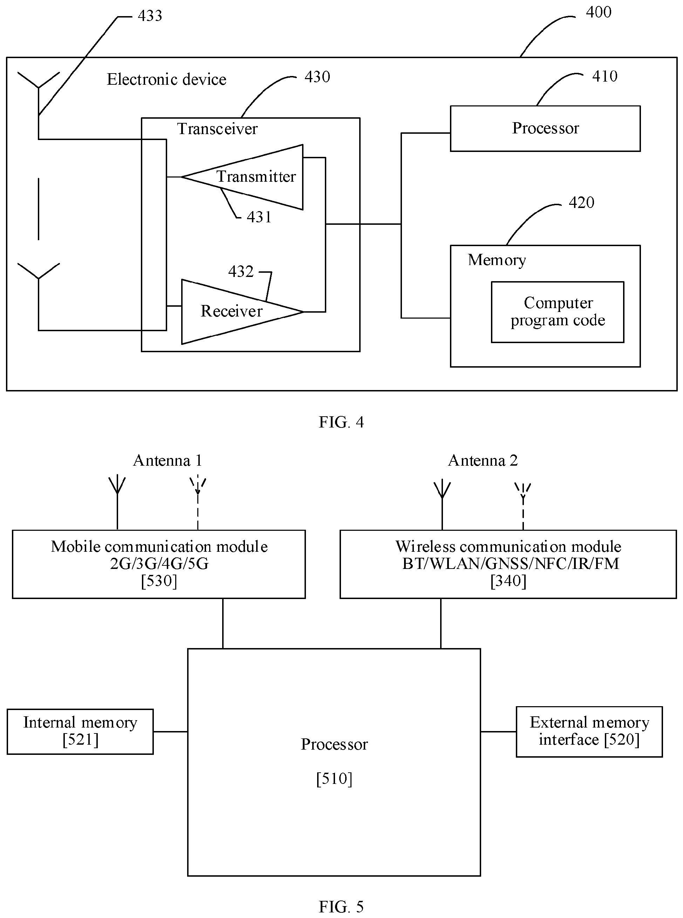

Referring to FIG. 4, it is a schematic diagram of hardware composition of an electronic device according to an embodiment of this application. The electronic device may be the first device, and includes, but is not limited to, a base station and a core network unit. FIG. 4 is a schematic structural diagram of a simplified base station. The base station includes a part 410, a part 420, and a part 430. The part 410 is mainly configured to perform baseband processing and control the base station. The part 410 is generally a control center of the base station, may be generally referred to as a processor, and is configured to control the base station to perform a processing operation on a first device side in the foregoing method embodiments. The part 420 is mainly configured to store computer program code and data. The part 430 is mainly configured to receive and send a radio frequency signal and convert the radio frequency signal and a baseband signal. The part 430 may be generally referred to as a transceiver module, a transceiver, a transceiver circuit, a transceiver, or the like. The transceiver module of the part 430 may also be referred to as a transceiver, a transceiver machine, or the like. The transceiver module includes an antenna 433 and a radio frequency circuit (not shown in the figure). The radio frequency circuit is mainly configured to perform radio frequency processing. Optionally, a component configured to implement a receiving function in the part 430 may be considered as the receiver, and a component configured to implement a sending function may be considered as the transmitter. In other words, the part 430 includes a receiver 432 and a transmitter 431. The receiver may also be referred to as a receiving module, a receiver, a receiving circuit, or the like. The transmitter may be referred to as a transmitting module, a transmitter machine, a transmitting circuit, or the like.

The part 410 and the part 420 may include one or more boards. Each board may include one or more processors and one or more memories. The processor is configured to read and execute a program in the memory to implement a baseband processing function and control the base station. If a plurality of boards exist, the boards may be interconnected to enhance the processing capability. In an optional implementation, the plurality of boards may share one or more processors, or the plurality of boards share one or more memories, or the plurality of boards simultaneously share one or more processors.

For example, in an implementation, the transceiver module in the part 430 is configured to perform a process related to receiving and sending performed by the base station (the first device) in the foregoing method embodiments. The processor in the part 410 is configured to perform a process related to processing performed by the base station in the foregoing method embodiments.

It should be understood that FIG. 4 is merely an example rather than a limitation, and the foregoing network devices including the processor, the memory, and the transceiver may not rely on the structure shown in FIG. 4.

Referring to FIG. 5, it is a schematic diagram of hardware composition of another electronic device according to an embodiment of this application. The electronic device may be the second device. The second device may be a terminal, and includes, but is not limited to, an electronic device such as a mobile phone or a smart wearable device (such as a smart watch). A mobile phone is used as an example below. The electronic device may include a processor 510, an external memory interface 520, an internal memory 521, an antenna 1, an antenna 2, a mobile communication module 530, a wireless communication module 540, and the like.

It may be understood that the structure shown in this embodiment constitutes no specific limitation on the electronic device. In some other embodiments, the electronic device may include more or fewer components than those shown in the figure, some components may be combined, some components may be split, or a different component deployment may be used. The components shown in the figure may be implemented by using hardware, software, or a combination of software and hardware.

The processor 510 may include one or more processing units. For example, the processor 510 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices or may be integrated into one or more processors.

It may be understood that the interface connection relationship between the modules illustrated in this embodiment is merely an example for description, and does not constitute a limitation on a structure of the electronic device. In some other embodiments of this application, the electronic device may alternatively use an interface connection manner different from that in the foregoing embodiment, or use a combination of a plurality of the interface connection manners.

The external memory interface 520 may be configured to connect to an external storage card such as a Micro SD card, to expand a storage capability of the electronic device. The external memory card communicates with the processor 510 by using the external memory interface 520, to implement a data storage function. For example, files such as music and a video are stored in the external storage card.

The internal memory 521 may be configured to store computer executable program code, where the executable program code includes instructions. The processor 510 runs the instructions stored in the internal memory 521, to implement various functional applications and data processing of the electronic device. The internal memory 521 may include a program storage area and a data storage area. The program storage region may store an operating system, an application program required by at least one function (for example, a sound playback function or an image playback function), and the like. The data storage area may store data (for example, audio data and an address book) and the like created during use of the electronic device. In addition, the internal memory 521 may include a high-speed random access memory, and may further include a non-volatile memory, for example, at least one magnetic disk storage device, a flash memory device, and a universal flash storage (universal flash storage, UFS). The processor 510 runs the instructions stored in the internal memory 521 and/or the instructions stored in the memory arranged in the processor, to implement various function applications and data processing of the electronic device.

A wireless communication function of the electronic device may be implemented through the antenna 1, the antenna 2, the mobile communication module 530, the wireless communication module 540, the modem processor, the baseband processor, and the like.

The antenna 1 and the antenna 2 are configured to send and receive an electromagnetic wave signal. Each antenna in the electronic device may be configured to cover one or more communication frequency bands. Different antennas may be further reused to improve a utilization rate of the antennas. For example, the antenna 1 may be multiplexed into a diversity antenna of a wireless local area network. In some other embodiments, the antenna may be used in combination with a tuning switch.

The mobile communication module 530 may provide a solution to wireless communication including 2G/3G/4G/5G and the like applied to the electronic device. The mobile communication module 530 may include at least one filter, a switch, a power amplifier, a low noise amplifier (low noise amplifier, LNA), and the like. The mobile communication module 530 may receive an electromagnetic wave through the antenna 1, perform processing such as filtering and amplification on the received electromagnetic wave, and transmit the electromagnetic wave to the modem processor for demodulation. The mobile communication module 530 may further amplify a signal modulated by the modem processor, and convert the signal into an electromagnetic wave through the antenna 1 for radiation. In some embodiments, at least some of functional modules of the mobile communication module 530 may be arranged in the processor 510. In some embodiments, at least some of the functional modules of the mobile communication module 530 may be arranged in a same device as at least some modules of the processor 510.

In some embodiments, the electronic device initiates or receives a call request through the mobile communication module 530 and the antenna 1.

In addition, an operating system is run on the foregoing components, for example, an iOS operating system, an Android operating system, or a Windows operating system. An application may be installed and run in the operating system. It may be clearly understood by a person skilled in the art that, for a convenient and brief description, the explanation and beneficial effects of related contents in any electronic device provided above can refer to the corresponding method embodiment provided above. Details are not described herein again.

This application further provides a communication system. The communication system may include the first device (for example, the network device such as a base station) shown in FIG. 4 and the second device (for example, the terminal such as a mobile phone) shown in FIG. 5.

In this application, the terminal or the network device may include a hardware layer, an operating system layer running in the hardware layer, and an application layer running on the operating system layer. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include an application such as a browser, an address book, word processing software, or instant messaging software.

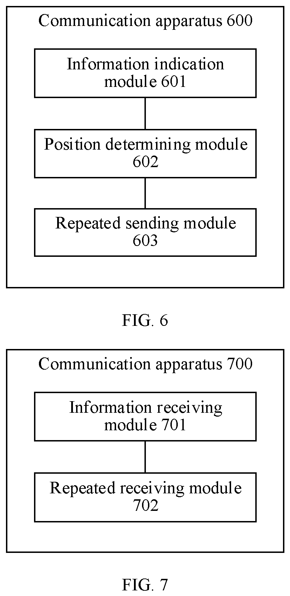

Referring to FIG. 6, it is a schematic diagram of a communication apparatus according to an embodiment of this application. The communication apparatus 600 is applied to an electronic device such as a base station, and includes: an information indication module 601, a position determining module 602, and a repeated sending module 603.

The information indication module 601 is configured to indicate the configuration information of the physical downlink control channel PDCCH of the target search space SS, the configuration information including the maximum number of retransmissions.

The position determining module 602 is configured to determine the retransmission time domain position of the SS PDCCH.

The repeated sending module 603 is configured to repeatedly send the SS PDCCH in the retransmission time domain position until the maximum number of retransmissions is reached.

Based on the above, this application discloses a communication apparatus. The SS PDCCH is repeatedly sent for a plurality of times in a determined retransmission time domain position, until the maximum number of retransmissions is reached, so that a corresponding transmission performance requirement can be satisfied, thereby reducing loss of wireless communication, enhancing downlink coverage, and improving communication quality.

Referring to FIG. 7, it is a schematic diagram of another communication apparatus according to an embodiment of this application. The communication apparatus 700 is applied to an electronic device such as a mobile phone or a computer, and includes: an information receiving module 701 and a repeated receiving module 702.

The information receiving module 701 is configured to receive the configuration information of the physical downlink control channel PDCCH of the target search space SS, the configuration information including the maximum number of retransmissions.

The repeated receiving module 702 is configured to repeatedly receive the SS PDCCH in the retransmission time domain position until the maximum number of retransmissions is reached.

Based on the above, this application discloses a communication apparatus. The corresponding transmission performance requirement may be satisfied, the loss of wireless communication may be reduced, the downlink coverage may be enhanced, and the communication quality may be improved by repeatedly receiving the SS PDCCH in the determined retransmission time domain position until the maximum number of retransmissions is reached.

A person skilled in the art may clearly understand that, for convenience and conciseness of description, for specific operating processes of the system, the device, and the apparatus described above, reference may be made to the corresponding processes in the foregoing method embodiments. Details are not described herein again.

The foregoing descriptions and the foregoing embodiments are only used to describe the technical solutions of this application, but not intended to limit this application. Although this application has been described in detail with reference to the foregoing embodiments, it should be understood by a person skilled in the art that the technical solutions described in the foregoing embodiments may still be modified, or some or all of technical features may be replaced by equivalents. However, these modifications or replacements do not cause the essence of corresponding technical solutions to depart from the scope of the technical solutions in embodiments of this application.

## Claims

1. A communication method, applied to a network device, the method comprising:
indicating configuration information of a physical downlink control channel PDCCH of a target search space SS, wherein the configuration information comprises information about a maximum number of retransmissions;
determining an available retransmission time domain position of the PDCCH of the SS; and
repeatedly sending, in the available retransmission time domain position, the PDCCH of the SS based on the information about a maximum number of retransmissions.

2. The method according to claim 1, wherein the configuration information further comprises initial transmission configuration information and/or transmission period information.

3. The method according to claim 2, wherein a length of a transmission period is a sum of target quantities of slots, and a method for determining a transmission time domain position of the PDCCH of the SS comprises:
determining whether a start slot in the transmission period satisfies the following equation: $\left({2}^{μ}\times 10{n}_{f}+{n}_{s}\right) modT = {Offset}_{slot}$
wherein µ is a subcarrier spacing parameter, n_{f} is a system frame number, nₛ is a slot number within a radio frame, T is the transmission period, and offsetₛₗₒₜ is a period offset value;
determining, as a transmission period of the PDCCH of the SS, a time window determined by the start slot and a duration T if the start slot in the transmission period satisfies the equation; and
determining an initial transmission time domain position and/or the available retransmission time domain position of the PDCCH of the SS within the transmission period of the PDCCH of the SS.

4. The method according to claim 3, wherein the determining an initial transmission time domain position of the PDCCH of the SS within the transmission period of the PDCCH of the SS comprises:
using a first transmission occasion as the initial transmission time domain position of the PDCCH of the SS within the transmission period of the PDCCH of the SS.

5. The method according to claim 4, wherein a target SS is a common search space CSS, and the determining the available retransmission time domain position of the PDCCH of the SS comprises:
determining a retransmission time domain position set for retransmission of the PDCCH of the CSS; and
determining, as an available retransmission time domain position of the PDCCH of the CSS, a time domain position following the initial transmission time domain position in the retransmission time domain position set within the transmission period of the PDCCH of the CSS.

6. The method according to claim 5, wherein the indicating configuration information of a physical downlink control channel PDCCH of a target search space SS comprises:
indicating the configuration information of the PDCCH of the CSS through first system information block SIB1 signaling or radio resource control RRC signaling.

7. The method according to claim 5, wherein the repeatedly sending, in the available retransmission time domain position, the PDCCH of the SS based on the information about a maximum number of retransmissions comprises:
determining an initial-transmission candidate PDCCH set for an initial transmission of the PDCCH of the CSS; and
repeatedly sending, in the available retransmission time domain position, the PDCCH of the CSS based on the information about a maximum number of retransmissions and a retransmission candidate PDCCH set, wherein the retransmission candidate PDCCH set corresponds to the initial-transmission candidate PDCCH set.

8. The method according to claim 5, wherein the repeatedly sending, in the available retransmission time domain position, the PDCCH of the SS based on the information about a maximum number of retransmissions comprises:
determining an initial transmission SS for an initial transmission of the PDCCH of the CSS; and
repeatedly sending, in the retransmission time domain position, the PDCCH of the CSS based on the information about a maximum number of retransmissions and a retransmission SS, wherein a candidate PDCCH set of the retransmission SS is the same as a candidate PDCCH set of the initial transmission SS.

9. The method according to claim 2, wherein the configuration information further comprises frequency domain resource CORESET configuration information.

10. The method according to claim 4, wherein the target SS is a dedicated search space USS, and the determining the available retransmission time domain position of the PDCCH of the SS comprises:
determining a retransmission time domain position set for retransmission of the PDCCH of the USS based on CORESET configuration information corresponding to the USS; and
determining, as the available retransmission time domain position of the PDCCH of the USS, a time domain position following the initial transmission time domain position in the retransmission time domain position set.

11. The method according to claim 10, wherein the indicating configuration information of a physical downlink control channel PDCCH of a target search space SS comprises:
indicating configuration information of the PDCCH of the USS through RRC signaling.

12. A communication method, applied to a terminal device, the method comprising:
receiving configuration information of a physical downlink control channel PDCCH of a target search space SS, wherein the configuration information comprises information about a maximum number of retransmissions;
determining an available retransmission time domain position of the PDCCH of the SS; and
repeatedly receiving, in the available retransmission time domain position, the PDCCH of the SS based on the information about a maximum number of retransmissions.

13. The method according to claim 12, wherein the repeatedly receiving the PDCCH of the SS based on the information about a maximum number of retransmissions comprises:
repeatedly receiving the PDCCH of the SS based on the information about a maximum number of retransmissions if signal quality of the PDCCH of the SS is less than or equal to a quality threshold.

14. The method according to claim 12, wherein the configuration information further comprises initial transmission configuration information and/or transmission period information.

15. The method according to claim 14, wherein a length of a transmission period is a sum of target quantities of slots, and a method for determining a transmission time domain position of the PDCCH of the SS comprises:
determining whether a start slot in the transmission period satisfies the following equation: $\left({2}^{μ}\times 10{n}_{f}+{n}_{s}\right) modT = {Offset}_{slot}$
wherein µ is a subcarrier spacing parameter, n_{f} is a system frame number, nₛ is a slot number within a radio frame, T is the transmission period, and offsetₛₗₒₜ is a period offset value;
determining, as a transmission period of the PDCCH of the SS, a time window determined by the start slot and a duration T if the start slot in the transmission period satisfies the equation; and
determining an initial transmission time domain position and/or the available retransmission time domain position of the PDCCH of the SS within the transmission period of the PDCCH of the SS.

16. The method according to claim 3, wherein the determining an initial transmission time domain position of the PDCCH of the SS within the transmission period of the PDCCH of the SS comprises:
using a first transmission occasion as the initial transmission time domain position of the PDCCH of the SS within the transmission period of the PDCCH of the SS.

17. The method according to claim 16, wherein a target SS is a common search space CSS, and the determining the available retransmission time domain position of the PDCCH of the SS comprises:
determining a retransmission time domain position set for retransmission of the PDCCH of the CSS; and
determining, as an available retransmission time domain position of the PDCCH of the CSS, a time domain position following the initial transmission time domain position in the retransmission time domain position set within the transmission period of the PDCCH of the CSS.

18. The method according to claim 17, wherein the receiving configuration information of a physical downlink control channel PDCCH of a target search space SS comprises:
receiving the configuration information of the PDCCH of the CSS through first system information block SIB1 signaling or radio resource control RRC signaling.

19. The method according to claim 17, wherein the repeatedly receiving, in the available retransmission time domain position, the PDCCH of the SS based on the information about a maximum number of retransmissions comprises:
determining an initial-transmission candidate PDCCH set for an initial transmission of the PDCCH of the CSS; and
repeatedly receiving, in the available retransmission time domain position, the PDCCH of the CSS based on the information about a maximum number of retransmissions and a retransmission candidate PDCCH set, wherein the retransmission candidate PDCCH set corresponds to the initial-transmission candidate PDCCH set.

20. The method according to claim 17, wherein the repeatedly receiving, in the available retransmission time domain position, the PDCCH of the SS based on the information about a maximum number of retransmissions comprises:
determining an initial transmission SS for an initial transmission of the PDCCH of the CSS; and
repeatedly receiving, in the retransmission time domain position, the PDCCH of the CSS based on the information about a maximum number of retransmissions and a retransmission SS, wherein a candidate PDCCH set of the retransmission SS is the same as a candidate PDCCH set of the initial transmission SS.

21. The method according to claim 14, wherein the configuration information further comprises frequency domain resource CORESET configuration information.

22. The method according to claim 16, wherein the target SS is a dedicated search space USS, and the determining the available retransmission time domain position of the PDCCH of the SS comprises:
determining a retransmission time domain position set for retransmission of the PDCCH of the USS based on CORESET configuration information corresponding to the USS; and
determining, as the available retransmission time domain position of the PDCCH of the USS, a time domain position following the initial transmission time domain position in the retransmission time domain position set.

23. The method according to claim 22, wherein the sending configuration information of a physical downlink control channel PDCCH of a target search space SS comprises:
sending configuration information of the PDCCH of the USS through RRC signaling.

24. A network device, wherein the network device comprises:
a memory, configured to store a computer program or computer instructions; and
a processor, configured to execute the computer program or the computer instructions stored in the memory, to enable the network device to perform the method according to any one of claims 1 to 11.

25. A terminal device, wherein the terminal device comprises:
a memory, configured to store a computer program or computer instructions; and
a processor, configured to execute the computer program or the computer instructions stored in the memory, to enable the terminal device to perform the method according to any one of claims 12 to 23.

26. A communication system, wherein the system comprises a first device and a second device, the first device is configured to perform the method according to any one of claims 1 to 11, and the second device is configured to perform the method according to any one of claims 12 to 23.

27. A computer storage medium, configured to store a computer program, wherein the computer program, when executed, is used for implementing the method according to any one of claims 1 to 23.
